# EUROPEAN PATENT SPECIFICATION

(11) **EP 3 030 533 B1**
(45) Date of publication and mention of the grant of the patent: **27.03.2019**
(21) Application number: 14834810.5
(22) Date of filing: 07.08.2014
(51) Int. Cl.: C04B 18/10, C04B 18/30, C04B 28/02, C04B 22/04, C04B 38/02, C04B 38/10, C04B 28/26

(54) **METHOD OF MANUFACTURING A LIGHTWEIGHT CONCRETE**
VERFAHREN ZUR HERSTELLUNG VON LEICHTGEWICHTIGEM BETON
PROCÉDÉ DE FABRICATION DE BÉTON LÉGER

(30) Priority: 07.08.2013 US 201361863308 P; 19.09.2013 US 201361879945 P
(43) Date of publication of application: 15.06.2016
(73) Proprietor: Nanyang Technological University, Singapore 639798 (SG)
(72) Inventor: YANG, En-Hua, Singapore 639798 (SG); LIU, Yiquan, Singapore 639798 (SG)
(74) Representative: Viering, Jentschura & Partner mbB Patent- und Rechtsanwälte
(86) International application number: PCT/SG2014/000375
(87) International publication number: WO 2015/020612

(56) References cited:
- WO-A1-02/11960
- CN-A- 101 891 498
- CN-A- 101 891 498
- CN-A- 103 387 411
- JP-A- 2002 326 853
- JP-A- 2002 326 853
- US-A1- 2011 100 260
- QIAO ET AL: "Production of lightweight concrete using incinerator bottom ash", CONSTRUCTION AND BUILDING MATERIALS, ELSEVIER, NETHERLANDS, vol. 22, no. 4, 1 February 2008 (2008-02-01), pages 473-480, XP022450145, ISSN: 0950-0618, DOI: 10.1016/J.CONBUILDMAT.2006.11.013
- HOLT E ET AL: "Use of gasification residues in aerated autoclaved concrete", CEMENT AND CONCRETE RESEARCH, PERGAMON PRESS, ELMSFORD, NY, US, vol. 35, no. 4, 1 April 2005 (2005-04-01), pages 796-802, XP027645687, ISSN: 0008-8846 [retrieved on 2005-04-01]
- BERTOLINI L ET AL: "MSWI ashes as mineral additions in concrete", CEMENT AND CONCRETE RESEARCH, PERGAMON PRESS, ELMSFORD, NY, US, vol. 34, no. 10, 1 October 2004 (2004-10-01), pages 1899-1906, XP004548728, ISSN: 0008-8846, DOI: 10.1016/J.CEMCONRES.2004.02.001
- E. HOLT ET AL.: 'Use of gasification residues in aerated autoclaved concrete' CEMENT AND CONCRETE RESEARCH vol. 35, 2005, pages 796 - 802, XP027645687
- X.C. QIAO ET AL.: 'Production of lightweight concrete using incinerator bottom ash' CONSTRUCTION AND BUILDING MATERIALS vol. 22, 2008, pages 473 - 480, XP022450145
- BERTOLINI ET AL.: 'MSWI ashes as mineral additions in concrete' CEMENT AND CONCRETE RESEARCH vol. 34, no. ISS. 1, October 2004, pages 1899 - 1906, XP004548728
- J. PERA ET AL.: 'Use of incinerator bottom ash in concrete' CEMENT AND CONCRETE RESEARCH vol. 27, no. ISS. 1, January 1997, page L-5, XP002505490

## Description

### TECHNICAL FIELD

The invention relates to the manufacture of lightweight construction materials using waste incinerator ash. The ash may be derived from the bottom ash of a municipal solid waste incinerator facility.

### BACKGROUND

Incineration greatly reduces volume of municipal solid waste (MSW) and is the dominant waste treatment process in major cities and land scarce countries such as Singapore. Generally, two types of ashes are generated from MSW incineration - about 80 % of the ash is incineration bottom ash (IBA), while the remaining 20 % is incineration fly ash (IFA). Of the two, IBA contains much lower amounts of leachable heavy metals and highly toxic organic substances such as dioxins. In addition, chloride content in IBA is much lower.

Studies have been carried out on potential use of IBA in civil engineering applications, such as road construction, embankment, pavement, aggregate, and as fillers for concrete.

JP 2002 326853 A discloses a lightweight concrete comprising a portland cement, a refuse derived fuel ash containing 4.2 wt% metallic aluminium and water wherein said components are mixed, formed and cured. This document discloses incineration ashes as an alternative.

Although IBA may potentially be used as replacement material in base course and sub-base for road construction, concerns regarding leaching of heavy metals into soil and underground water, which can lead to serious health and environmental problems, exist. Mechanisms of long-term leaching remain unclear, and remain matters of research. Further, presence of IBA as aggregate in concrete may lead to expansion and cracking of the concrete due to reaction between metallic aluminum in IBA and cement.

Unlike ferrous metal which may be easily extracted, recovery efficiency of non-ferrous metals such as aluminum is relatively low. Traditional eddy current separation method showed an average recovery efficiency of 30 % of the aluminum fed into the furnace of the incineration plant. It was also reported the recovery efficiency is nearly zero for fine IBA particles (size range of 5 mm to 12 mm).

Even though pre-treatment methods, such as vitrifying, may address some of the issues concerning IBA use in civil engineering applications, high costs and process complexities associated with the methods render them unattractive for practical and industrial application.

For example, conventional approach of recycling and reutilization of IBA as aggregates requires pre-treatment to improve the safety and usability of IBA. The most economic phosphate-based IBA treatment, such as WES-PHix, costs S$30 per ton which is about two times the cost of natural aggregates of S$15/ton. Vitrification involves higher costs of S$200/ton. Therefore, unless pre-treatment costs may be reduced to less than S$15/ton, it is not economically attractive to use IBA as a replacement for aggregates.

In view of the above, there remains a need for an improved method to utilize waste incinerator ash that overcomes or at least alleviates one or more of the above-mentioned problems.

### SUMMARY

According to the invention, a method of manufacturing a lightweight concrete is provided. The method comprises
a) providing ash obtained from incineration of waste, the ash comprising at least about 0.1 wt% metallic aluminum;
b) mixing the ash with a binder to form a mixture; and
c) curing the mixture to obtain the lightweight concrete,
wherein the ash is derived from bottom ash of a solid waste incinerator facility; providing ash obtained from incineration of waste comprises reducing particle size of the ash to an average particle size of 500 µm or less.

Lightweight concrete manufactured by a method according to the invention is described herein.

Lightweight concrete has a density of about 200 kg/m³ to about 1900 kg/m³, a compressive strength of about 0.5 MPa to about 70 MPa, and a thermal conductivity in the range of about 0.05 W/m-k to about 1.3 W/m-k.

### BRIEF DESCRIPTION OF THE DRAWINGS

The invention will be better understood with reference to the detailed description when considered in conjunction with the non-limiting examples and the accompanying drawings, in which:
**FIG. 1A** is an optical microscopy image of pore structure in lightweight concrete using inorganic polymer as binder (pores in black) according to an embodiment. **FIG. 1B** is a binary image of the optical microscopy image in **FIG. 1A****.**
**FIG. 2** is a graph showing effects of mix duration (minutes) and liquid to solid ratio (L/S) on the dry density (kg/m³) of lightweight concrete using inorganic polymer as binder according to embodiments.
**FIG. 3** is a graph showing relationship between compressive strength and dry density of lightweight concrete using inorganic polymer as binder according to embodiments.
**FIG. 4** is a graph showing relationship between dry density (kg/m³) and macro-porosity (%) of lightweight concrete using inorganic polymer as binder according to embodiments.
**FIG. 5A** is an optical microscopy image of pore structure in lightweight concrete using hydraulic cement as binder (pores in black) according to an embodiment. **FIG. 5B** is a binary image of the optical microscopy image in **FIG. 5A****.**
**FIG. 6** is a graph showing compressive strength (MPa) versus density (kg/m³) of lightweight concrete using hydraulic cement as binder according to embodiments.
**FIG. 7A** is a graph showing effect of alkali molarity (mol/L) on the compressive strength (MPa) and dry density (kg/m³) of lightweight concrete using hydraulic cement as binder according to embodiments. **FIG. 7B** is a graph showing effect of IBA replacement ratio (%) on the compressive strength (MPa) and dry density (kg/m³) of lightweight concrete using hydraulic cement as binder according to embodiments.
**FIG. 8** is a graph showing effect of macro-porosity (%) on dry density (kg/m³) and compressive strength (MPa) of lightweight concrete using hydraulic cement as binder according to embodiments.
**FIG. 9** shows typical scanning electron microscopy (SEM) images of IBA lightweight concrete using hydraulic cement as binder prepared with **(A)** tap water, matrix; **(B)** tap water, wall of macro-pore; **(C)** sodium hydroxide (NaOH) solution, matrix; and **(D)** NaOH solution, wall of macro-pore. Scale bar in the figures denote a length of 1 *µ*m.

### DETAILED DESCRIPTION

Instead of pre-treating waste incinerator ash to remove or to immobilize/stabilize metallic aluminum, embodiments disclosed herein utilize waste incinerator ash containing metallic aluminum as aerating agent for the manufacture of lightweight construction materials, such as aerated concrete.

By using ash obtained from incineration of waste, addition of metallic aluminum powder is not required for producing the lightweight construction materials. In addition, waste incinerator ash may possess pozzolanic and/or cementitious properties, which render its suitability as a replacement for cement. With rich metallic aluminum and silicate content, waste incinerator ash may be used as a precursor for manufacturing alkaline-activated aluminosilicate, or geopolymer, binders.

Furthermore, by utilizing waste incinerator ash in production of products that have higher value, such as aerated concrete, this may render use of waste incinerator ash economically attractive and viable, as compared to low value applications such as aggregates. By replacing aluminum powder, cement, and other binder materials using waste incinerator ash, it is estimated that raw material costs may be reduced by as much as 30 %.

With the above in mind, the invention refers to a method of manufacturing a lightweight concrete. As used herein, the term "lightweight concrete" refers to concrete having a density lower than that of normal concrete, where typical density of normal concrete is about 2,400 kg/m³. The term "aerated concrete" as used herein refers to a type of lightweight concrete that has air voids entrapped therein to render its lower density than that of a normal concrete.

The lightweight concrete disclosed herein has a density of about 200 kg/m³ to about 1900 kg/m³, a compressive strength of about 0.5 MPa to about 70 MPa, and a thermal conductivity of about 0.05 W/m-k to about 1.3 W/m-k, rendering its suitability for thermal insulation and sound-proofing. Applications of such lightweight concrete include, but are not limited to, structural use such as in floors and trench fills, thermal insulation such as roof insulation and other insulating purposes, as well as to make masonry units.

Various embodiments disclosed herein refer to use of waste incinerator ash as aerating agent to entrain air and to reduce density of construction materials. The method includes providing ash obtained from incineration of waste. Generally, ash obtained from incineration of waste, or waste incinerator ash, may be classified as bottom ash and fly ash. The term "bottom ash", otherwise termed herein as "incinerator bottom ash", IBA, refers to ash that is collected at the bottom of a combustion chamber or incinerator. In some municipal solid waste combustors, the bottom ash is recovered from the furnace grate of the combustor chamber. In other combustors, such as fluidized-bed type combustors, the bottom ash is recovered from the bed, or other solid ash residue access point.

Fly ash, on the other hand, refers to ash that is lighter than bottom ash and which is collected mainly in the discharge gas processing system connected to the incinerator or in a dust collector provided in the discharge gas processing system. Bottom ash and fly ash have significantly different properties and compositions, with fly ash having a smaller specific weight and containing more volatile components than bottom ash.

In various embodiments, the ash is derived from bottom ash of a solid waste incinerator facility. Typically, bottom ash contains a heterogeneous mixture of slag, glass, ceramics, ferrous and non-ferrous metals, minerals, non-combustibles, and unburnt organic matter. **TABLE 1** provides an exemplary chemical composition of ash disclosed herein.

**TABLE 1: Chemical compositions of incinerator bottom ash**

| Oxide | Content (%) | Oxide | Content (%) |
|---|---|---|---|
| SiO₂ | 32.75 | K₂O | 1.24 |
| CaO | 29.06 | ZnO | 0.81 |
| Fe₂O₃ | 10.02 | CuO | 0.31 |
| Al₂O₃ | 8.57 | Cr₂O₃ | 0.22 |
| P₂O₅ | 4.77 | MnO | 0.15 |
| SO₃ | 3.01 | PbO | 0.12 |
| Na₂O | 2.87 | SrO | 0.10 |
| MgO | 1.75 | NiO | 0.06 |
| TiO₂ | 1.57 | ZrO₂ | 0.01 |

The ash obtained from incineration of waste comprises at least about 0.1 wt% metallic aluminum. In various embodiments, the ash obtained from incineration of waste comprises at least about 0.5 wt% metallic aluminum, such as at least about 1 wt%, about 2 wt%, about 3 wt%, about 5 wt%, or at least about 10 wt% metallic aluminum.

As mentioned above, metallic aluminum present in the ash may act as an aerating agent. It may react in an alkaline environment, such as fresh cement paste disclosed herein, to generate bubbles of hydrogen gas. With subsequent hardening and curing of the mixture, a lightweight concrete may be obtained.

Providing ash obtained from incineration of waste includes reducing particle size of the ash to an average particle size of about 500 *µ*m or less. For example, particle size of the ash may be reduced to an average particle size in the range of about 20 *µ*m to about 500 *µ*m, such as about 40 *µ*m to about 500 *µ*m, about 100 *µ*m to about 500 *µ*m, about 150 *µ*m to about 500 *µ*m, about 200 *µ*m to about 500 *µ*m, about 300 *µ*m to about 500 *µ*m, about 400 *µ*m to about 500 *µ*m, about 20 *µ*m to about 400 *µ*m, about 20 *µ*m to about 300 *µ*m, about 20 *µ*m to about 200 *µ*m, about 20 *µ*m to about 100 *µ*m, about 20 *µ*m to about 50 *µ*m, or about 30 *µ*m to about 50 *µ*m. In specific embodiments, providing ash obtained from incineration of waste may include reducing particle size of the ash to an average particle size of about 20 *µ*m to about 40 *µ*m.

Reducing particle size of the ash may be carried out by any suitable size reduction methods such as, but not limited to, grinding, crushing, cutting, milling, and combinations thereof. In specific embodiments, reducing particle size of the ash is carried out by ball milling.

In various embodiments, providing ash obtained from incineration of waste comprises drying the ash. Drying the ash may be carried out at ambient temperature, defined herein as a temperature of between about 20 °C to about 40 °C, or at elevated temperatures.

The method includes mixing the waste incinerator ash with a binder to form a mixture. As used herein, the term "binder" refers to a material that is capable of attaching two or more materials to one another such that the two or more materials are held together.

Ratio of ash to binder may be in the range of about 0.01 to about 100 by weight. For example, ratio of ash to binder may be in the range of about 1 to about 100, about 10 to about 100, about 25 to about 100, about 50 to about 100, about 75 to about 100, about 0.01 to about 75, about 0.01 to about 50, about 0.01 to about 25, about 1 to about 80, about 10 to about 80, about 25 to about 75, or about 30 to about 60 by weight.

In various embodiments, the binder is selected from the group consisting of a hydraulic cement binder and an inorganic polymer binder.

In some embodiments, the binder comprises or consists of a hydraulic cement binder. In specific embodiments, the binder consists of a hydraulic cement binder. As used herein, the term "hydraulic cement" refers to cement that sets and hardens in the presence of water. In various embodiments, the hydraulic cement binder is selected from the group consisting of Portland cement, blended Portland cement, expansive cement, rapid setting and hardening cement, calcium aluminate cement, magnesium phosphate, and mixtures thereof. In specific embodiments, the hydraulic cement binder comprises or consists of Type I Portland cement.

Mixing the ash with a hydraulic cement binder may include adding at least one of a pozzolanic admixture, water, lime, alkali, and a set-control admixture to the mixture. For example, pozzolanic admixtures such as fly ash, silica fume, and/or ground granulated blast-furnace slag may be included in the mixture.

Ratio of water to the hydraulic cement binder in the mixture may be in the range of about 0.2 to about 1 by weight. For example, the ratio of water to the hydraulic cement binder may be in the range of about 0.3 to about 1 by weight, about 0.3 to about 0.9 by weight, or about 0.2 to about 0.8 by weight. In specific embodiments, the ratio of water to the hydraulic cement binder is about 0.35 to about 0.7 by weight.

Lime and/or alkalis may be added to accelerate hydrogen generation from the mixture containing ash and a hydraulic cement binder. In various embodiments, the lime comprises or consists of an alkaline earth metal carbonate. In specific embodiments, the lime comprises or consists of at least one of magnesium carbonate and calcium carbonate.

The alkali may be selected from the group consisting of an alkali metal hydroxide, an alkaline earth metal hydroxide, ammonium hydroxide, sodium carbonate, and combinations thereof. Examples of an alkali metal hydroxide include lithium hydroxide, sodium hydroxide, potassium hydroxide, rubidium hydroxide, cesium hydroxide, francium hydroxide, or combinations thereof. Examples of an alkaline earth metal hydroxide include beryllium hydroxide, beryllium hydroxide, magnesium hydroxide, calcium hydroxide, strontium hydroxide, barium hydroxide, or combinations thereof. In some embodiments, the alkali is selected from the group consisting of sodium hydroxide, potassium hydroxide, calcium hydroxide, magnesium hydroxide, sodium carbonate, and combinations thereof. In specific embodiments, the alkali comprises or consists of sodium hydroxide.

Concentration of hydroxide in the mixture may be 100 mol/L or less. For example, the hydroxide may be present in the mixture in the range of about 10 mol/L to about 100 mol/L, such as about 30 mol/L to about 100 mol/L, about 50 mol/L to about 100 mol/L, about 70 mol/L to about 100 mol/L, about 10 mol/L to about 70 mol/L, about 10 mol/L to about 50 mol/L, about 10 mol/L to about 30 mol/L, about 30 mol/L to about 80 mol/L, or about 20 mol/L to about 90 mol/L.

A set-control admixture may be added to control setting for the hydraulic cement binder. For example, the set-control admixture may be selected from the group consisting of gypsum, anhydrite, and combinations thereof. Gypsum and/or anhydrite may serve to delay hydration and setting so as to provide sufficient time for aeration in the mixture.

In some embodiments, the binder consists essentially or consists of an inorganic polymer binder. In specific embodiments, the binder consists of an inorganic polymer binder. As used herein, the term "inorganic polymer" refers to a compound having a skeletal structure that does not include carbon atoms. In various embodiments, the inorganic polymer binder is selected from the group consisting of alkali activated aluminosilicates, geopolymer, alkali activated cement, and mixtures thereof.

The inorganic polymer binder may be obtained by reacting an inorganic polymer precursor with an alkaline activator liquid. The precursor to form inorganic polymer binder may be selected from the group consisting of coal fly ash, metakaoline, waste incinerator ash, ground granulated blast-furnace slag, and combinations thereof.

The alkaline activator liquid for the inorganic polymer binder may comprise a silicate and/or a hydroxide selected from the group consisting an alkali-metal hydroxide, an alkaline earth metal hydroxide, ammonium hydroxide, and combinations thereof.

In various embodiments, the silicate comprises or consists of an alkali metal silicate. For example, the alkali metal silicate may be at least one of lithium silicate, sodium silicate, potassium silicate, rubidium silicate, cesium silicate, and francium silicate. In specific embodiments, the silicate comprises or consists of sodium silicate.

The hydroxide may be selected from the group consisting of an alkali metal hydroxide, an alkaline earth metal hydroxide, ammonium hydroxide, and combinations thereof. For example, the hydroxide may comprise or consist of an alkali metal hydroxide, such as lithium hydroxide, sodium hydroxide, potassium hydroxide, rubidium hydroxide, cesium hydroxide, francium hydroxide, or combinations thereof. The hydroxide may additionally or otherwise contain an alkaline earth metal hydroxide, such as beryllium hydroxide, beryllium hydroxide, magnesium hydroxide, calcium hydroxide, strontium hydroxide, barium hydroxide, or combinations thereof. In various embodiments, the hydroxide comprises or consists of sodium hydroxide.

In various embodiments, concentration of hydroxide in the alkaline activator liquid is at least 1 mol/L. For example, concentration of hydroxide in the alkaline activator liquid may be at least 2 mol/L, at least 4 mol/L, at least 6 mol/L, at least 8 mol/L, or at least 10 mol/L. In specific embodiments, concentration of hydroxide in the alkaline activator liquid is about 8 mol/L.

When hydroxide and silicate are both present in the alkaline activator liquid, ratio of hydroxide to silicate in the alkaline activator liquid may be in the range of about 0.2 to about 3 by weight. For example, ratio of hydroxide to silicate by weight in the alkaline activator liquid may be in the range of about 0.5 to about 3, about 1 to about 3 by weight, about 1.5 to about 3, about 2 to about 3, about 2.5 to about 3, about 0.2 to about 2.5, about 0.2 to about 2, about 0.2 to about 1.5, about 0.2 to about 1, about 0.5 to about 2.5, about 1 to about 2, or about 1.5 to about 2.5.

The silicate and/or the hydroxide may be at least substantially dissolved in an aqueous reagent. In various embodiments, the alkaline activator liquid is an aqueous solution of the silicate and/or the hydroxide.

Ratio of alkaline activator liquid to inorganic polymer binder may be in the range of about 0.3 to about 2 by weight. In various embodiments, ratio of the alkaline activator liquid to the inorganic polymer binder is in the range of about 0.5 to about 2, about 0.8 to about 2, about 1.5 to about 2, about 0.3 to about 1.5, about 0.3 to about 1, about 0.5 to about 1.5, about 0.5 to about 1, or about 0.8 to about 1.5.

In addition to the binder, a viscosity control agent and/or water reducing agent may be added to the mixture. The viscosity control agent and/or water reducing agent may be added to the mixture containing the hydraulic cement binder or the inorganic polymer binder to affect rheology of the mixture.

In various embodiments, the viscosity control agent is selected from the group consisting of methylcellulose, polyvinyl alcohol, starch, and combinations thereof.

Ratio of viscosity control agent to binder may not be more than 0.05 by weight. For example, ratio of viscosity control agent to binder may be in the range of about 0.005 to about 0.05, about 0.01 to about 0.05, about 0.02 to about 0.05, about 0.03 to about 0.05, about 0.005 to about 0.04, about 0.005 to about 0.03, or about 0.005 to about 0.02.

In various embodiments, the water reducing agent is selected from the group consisting of carboxylated polymer, gypsum, anhydrite, and mixtures thereof. Amount of water reducing agent used may depend on water content in the mixture as measured by the water-to-binder ratio, for example, type of lightweight filler, and type of water reducing agent used. In various embodiments, ratio of the water reducing agent to the binder is in the range of about 0.001 to about 0.002 by weight.

Apart from adding the viscosity control agent and/or the water reducing agent, mixing the ash with the binder to form a mixture may also include adding aggregates to the mixture. Amount and type of aggregates used may be varied depending on specific physical, mechanical and thermal properties of the lightweight concrete.

The aggregates may include coarse aggregates selected from the group consisting of gravel, crushed rock, slag aggregate, recycled aggregate, crushed quartz, granite, gneiss, basalt, limestone, and combinations thereof. In some embodiments, the aggregates comprise fine aggregates selected from the group consisting of sand, fly ash, silica fume, artificial light weight fine aggregate, and combinations thereof.

The mixing may be carried out in any suitable or conventional type of concrete or mortar mixer.

The method disclosed herein includes curing the mixture comprising the ash and the binder to obtain the lightweight concrete. Curing the mixture may be carried out at room temperature, at an elevated temperature such as steam curing, or at an elevated temperature and pressure such as in an autoclave.

In various embodiments, curing the mixture to obtain the lightweight concrete is carried out at a temperature in the range of about 20 °C to about 80 °C, such as about 25 °C to about 60 °C, about 25 °C to about 50 °C, about 25 °C to about 40 °C, about 30 °C to about 80 °C, about 45 °C to about 80 °C, about 60 °C to about 80 °C, or about 30 °C to about 60 °C. In specific embodiments, curing the mixture is carried out at a temperature in the range of about 75 °C to about 80 °C.

A lightweight concrete manufactured by a method according to the invention has a density in the range of about 200 kg/m³ to about 1900 kg/m³, a compressive strength in the range of about 0.5 MPa to about 70 MPa, and a thermal conductivity in the range of about 0.05 W/m-k to about 1.3 W/m-k.

The lightweight concrete may have a density of about 500 kg/m³ to about 1900 kg/m³, about 800 kg/m³ to about 1900 kg/m³, about 1000 kg/m³ to about 1900 kg/m³, about 200 kg/m³ to about 1000 kg/m³, about 200 kg/m³ to about 800 kg/m³, about 200 kg/m³ to about 500 kg/m³, about 500 kg/m³ to about 800 kg/m³, or about 400 kg/m³ to about 600 kg/m³.

The lightweight concrete may have a compressive strength of about 1 MPa to about 70 MPa, about 15 MPa to about 70 MPa, about 30 MPa to about 70 MPa, about 50 MPa to about 70 MPa, about 0.5 MPa to about 50 MPa, about 0.5 MPa to about 30 MPa, or about 10 MPa to about 50 MPa.

Thermal conductivity of the lightweight concrete may be in the range of about 0.1 W/m-k to about 1.3 W/m-k, about 0.5 W/m-k to about 0.3 W/m-k, about 0.7 W/m-k to about 1.3 W/m-k, about 0.05 W/m-k to about 1 W/m-k, about 0.05 W/m-k to about 0.8 W/m-k, about 0.3 W/m-k to about 1.2 W/m-k, or about 0.5 W/m-k to about 1 W/m-k.

By utilizing ash obtained from incineration of waste which would otherwise occupy space in the landfills, lifespan of landfills may be prolonged. Other benefits include reducing or eliminating disposal costs of ash, preserving land capacity, conserving dwindling supplies of natural raw materials, and mitigating potential environmental impacts.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The invention illustratively described herein may suitably be practiced in the absence of any element or elements, limitation or limitations, not specifically disclosed herein. Thus, for example, the terms "comprising", "including", "containing", etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed.

### EXPERIMENTAL SECTION

Conventional approach of recycling and reutilization of incinerator bottom ash (IBA) as aggregates requires costly pre-treatment to improve the safety and usability of IBA. Current cost of pre-treatment of IBA as road aggregates is around S$30 per ton, two times the cost of natural aggregates (S$15/ton). Other pre-treatment such as vitrification is even more costly (S$100/ton). It is therefore not attractive to use IBA to replace aggregates as it does not make economic sense, unless costs of the pre-treatment may be reduced to less than S$15/ton. In embodiments disclosed herein, ash obtained from incineration of waste such as IBA is utilized to produce high value products such as aerated concrete, which are economically attractive and viable, as compared to low value products such as IBA aggregate.

Typical mix proportions of aerated concrete may be found in **TABLE 2.**

**TABLE 2: Typical mix proportion and cost structure of lightweight aerated concrete**

| Material | Mix proportion (kg/m³) | Unit price (S$/ton) | Cost (S$/m³) | Cost ratio |
|---|---|---|---|---|
| Cement | 49 | 152 | 7.4 | 26% |
| Sand | 490 | 14 | 6.9 | 25% |
| Lime | 133 | 80 | 10.6 | 38% |
| Gypsum | 28 | 20 | 0.6 | 2% |
| Aluminum powder | 0.46 | 5,200 | 2.4 | 9% |
| | | Total | 27.9 | 100% |

Instead of pre-treating ash obtained from incineration of waste such as IBA to remove or to immobilize/stabilize metallic aluminum and heavy metals, embodiments disclosed herein utilizes the ash to replace costly aluminum powder and other binder material such as cement, sand, lime, and gypsum in the production of lightweight aerated concrete. With replacement of cement, lime, gypsum, aluminum powder by ash in production of aerated concrete, it is estimated the resulting lightweight aerated concrete has a cost advantage over the existing autoclaved aerated concrete by at least 20 %.

### Example 1: Material Preparation For Manufacture of Lightweight Concrete Using Inorganic Polymer as Binder (Embodiment 1)

Exemplary mixes for preparing lightweight concrete containing IBA, with mix proportion of IBA to alkaline solution and their mix durations (minutes), are tabulated in **TABLE 3.** Unlike conventional aerated concrete shown in **TABLE 2,** costly aerating agent (e.g. aluminum powder) and cementitious binders (e.g. cement and lime) was exempted in the current mix design. IBA was used as aerating agent and precursor together with alkaline solution to form inorganic polymer binder.

**TABLE 3: Mix proportions of examples, parts by weight**

| Mix No. | IBA | Alkaline solution | Mix duration (minutes) |
|---|---|---|---|
| 1 | 1 | 0.60 | 15 |
| 2 | 1 | 0.60 | 30 |
| 3 | 1 | 0.60 | 60 |
| 4 | 1 | 0.60 | 120 |
| 5 | 1 | 0.75 | 15 |
| 6 | 1 | 0.75 | 30 |
| 7 | 1 | 0.75 | 60 |
| 8 | 1 | 0.75 | 120 |
| 9 | 1 | 0.90 | 15 |
| 10 | 1 | 0.90 | 30 |
| 11 | 1 | 0.90 | 60 |
| 12 | 1 | 0.90 | 120 |
| 13 | 1 | 1.10 | 60 |

The IBA was collected from Keppel Seghers Tuas Waste-to-Energy incineration plant. The IBA granular was first dried and followed by ball milling until the average particle size is around 20 microns.

A mixture of sodium hydroxide and sodium silicate solution was prepared. Sodium hydroxide solution with 8 mol/L concentration was prepared, and sodium silicate solution (sodium silicate solids : water = 2 : 3) with molar ratio of SiO₂ to Na₂O of 2.9 to 3.2 was used. Mass ratio of the sodium hydroxide solution to the sodium silicate solution was 1:2.

The mixture was prepared in a mortar mixer with a planetary rotating blade. The IBA was dry mixed for approximately 1 to 2 minutes, followed by addition of alkaline solution and mixed for pre-determined time durations ranging from 15 to 120 minutes. The fresh mixture was cast into 50 mm cubic molds and vibrated for 30 seconds. The molds were covered with plastics to prevent water evaporation and the specimens were cured in elevated temperature of 75 °C right after casting. Specimens were demolded after 24 hours and then cured in elevated temperature of 75°C for another 2 days. After which, the specimens were stored in laboratory air.

### Example 2: Characterization (Embodiment 1)

Tests on the compressive strength, the dry density, and the pore structure were conducted to evaluate the physical and mechanical properties of the resulting lightweight concrete. For each mix, three specimens were tested and the average was reported for the compressive strength. The loading rate was controlled at 0.25 mm/min.

The dry density was determined in accordance with ASTM C 138-92. The specimens were first dried in oven at 105 °C for 24 hours. The dry density was defined as the ratio between the weight and the volume of the sample.

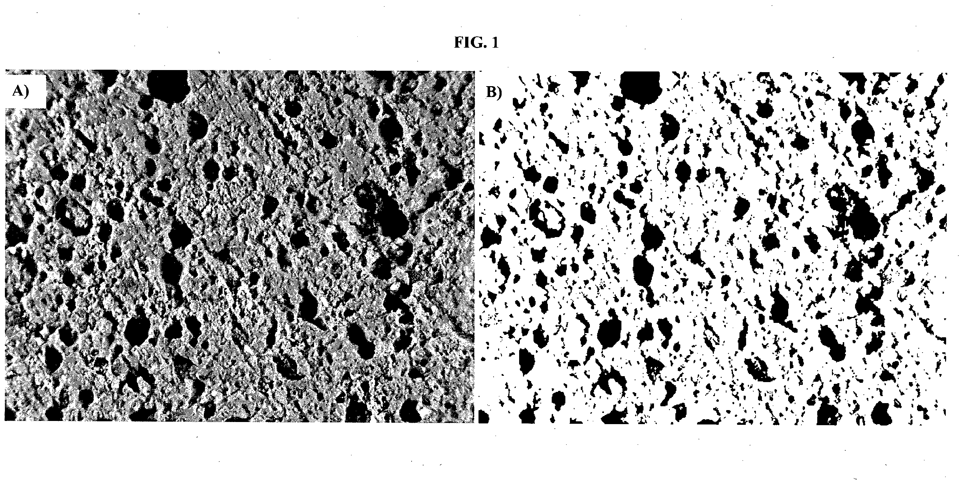

To evaluate the macro porosity of lightweight concrete, image of the cross-section of the specimen (12 x 9 mm²) was captured by means of an optical microscope. The photo was post-proceeded into a binary image for quantitative measurement of the macro porosity of the cross-section as shown in **FIG. 1****.**

**TABLE 4** summarizes the measured physical and mechanical properties of the resulting lightweight concrete. The metallic aluminum retained in IBA can react with alkaline solution to liberate hydrogen gas. The formation of porous structure decreases the dry density of lightweight concrete.

**TABLE 4: Density, compressive strength, and macro porosity of examples**

| Mix No. | Density (kg/m³) | Compressive strength (MPa) | Porosity (%) |
|---|---|---|---|
| 1 | 1008 | 2.26 | 10.3 |
| 2 | 1019 | 2.54 | 11.6 |
| 3 | 1008 | 2.58 | 11.9 |
| 4 | 1036 | 2.82 | 12.5 |
| 5 | 801 | 1.04 | 19.8 |
| 6 | 984 | 1.60 | 15.7 |
| 7 | 821 | 0.95 | 31 |
| 8 | 1017 | 2.34 | 13.8 |
| 9 | 612 | 1.04 | 27.3 |
| 10 | 929 | 1.88 | 15.6 |
| 11 | 869 | 1.47 | 25.3 |
| 12 | 939 | 1.90 | 11.9 |
| 13 | 676 | 1.28 | 37.3 |

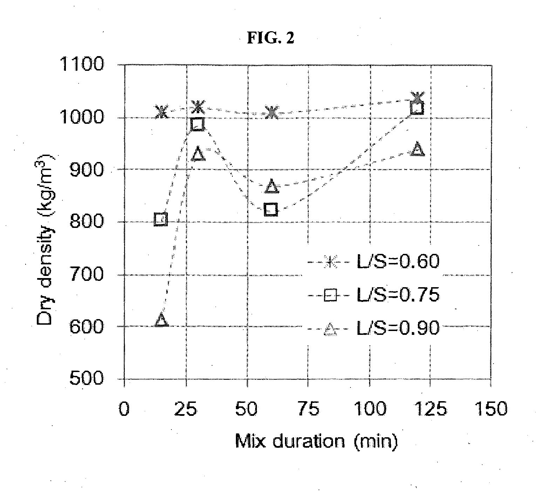

**FIG. 2** shows the effect of mix duration and liquid to solid ratio (L/S) on the dry density of lightweight concrete. L/S values of 0.6, 0.75 and 0.9 were used. As can be seen from the figure, the dry density of the resulting lightweight concrete ranges from 600 kg/m³ to around 1,000 kg/m³. The dry density increases with prolonged mixing in the first 30 minutes. After that, the dry density decreases when the mix duration is 60 minutes and increases again for the 120-minute mixing. Prolonged mixing may introduce two effects. On one hand, it allows escape of entrained air. On the other hand, mixing promotes reaction between metallic aluminum and alkali and increases the amount of hydrogen generation. The dry density at different mix duration is a result of these two competing mechanisms. It is plausible that the escaping of entrained air dominates the overall density when mixing time is less than 30 minutes. From 30 to 60 minutes, significant increase of hydrogen generation due to prolonged mix results a lower density. With further prolonged mixing, air escaping again dominates as most of the hydrogen reaction has completed.

As may be seen from the figure, the dry density generally decreases with increase in liquid to solid ratio. Not only does a higher L/S value increase capillary porosity, it also promotes hydrogen generation. An increase in capillary porosity and more hydrogen generation result in a lower density. Therefore, dry density of lightweight concrete may be adjusted through control of mix duration as well as liquid to solid ratio.

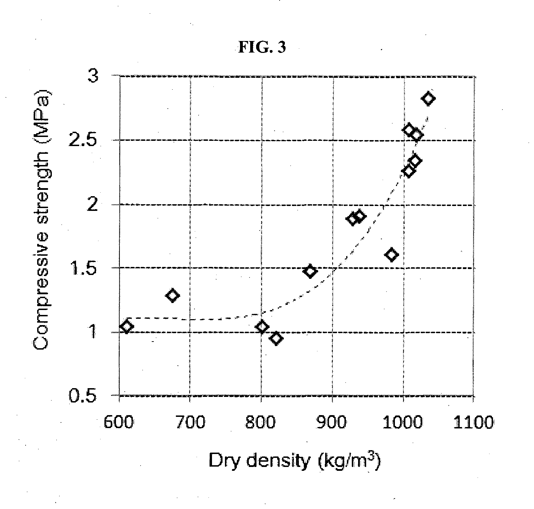

**FIG. 3** plots the compressive strength against the dry density of the sample. As can be seen, there is a strong positive correlation between the compressive strength and the dry density of lightweight concrete. The compressive strength was in vicinity of 1 MPa when the dry density was lower than 800 kg/m³. With the dry density exceeding 800 kg/m³, the compressive strength showed a rapid increase.

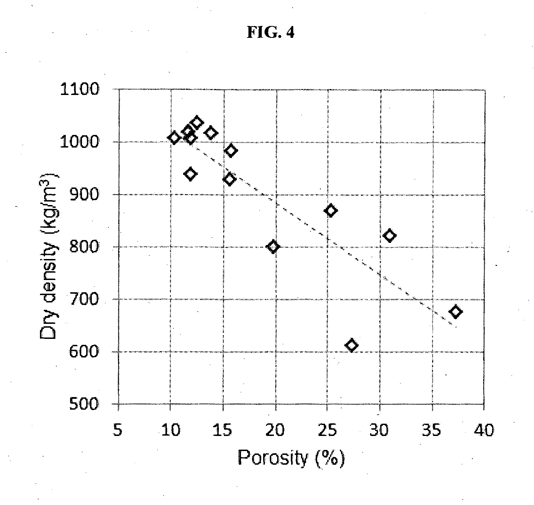

**FIG. 4** plots the dry density against macro-porosity of each sample. As can be seen, the lightweight concrete contains 10 % to 40 % visible voids. A negative linear correlation between the dry density and the porosity of lightweight concrete is observed as depicted in **FIG. 4****.** The increase of porosity is therefore the principal contributor to the decrease in the dry density as well in the compressive strength.

### Example 3: Material Preparation For Manufacture of Lightweight Concrete Using Hydraulic Cement as Binder (Embodiment 2)

Exemplary mixes - disclosed herein are for preparing lightweight concrete using hydraulic cement as the binder. IBA is used as the aerating agent to replace aluminum powder and as supplement to partially replace cement.

The mix proportions are tabulated in **TABLE 5.** Type I Portland cement was used in all exemplary mixes. The IBA was collected from Keppel Seghers Tuas Waste-to-Energy incineration plant. The IBA granular was first dried and followed by ball milling until the average particle size is around 20 microns. Normal river sand was adopted in the exemplary mixes. The mixes have a constant sand-to-binder ratio of 1 and a water-to-binder ratio between 0.35 and 0.70. The binder consists of IBA and cement in the ratio of 2-to-8 (mixes A and B), 4-to-6 (mix C1), and 6-to-4 (mix C2). Sodium hydroxide was used in mixes A and C to accelerate the hydrogen generation. The molarity of resulting alkaline solution ranges from 0.01 to 1.

**TABLE 5: Mix proportions of examples, parts by weight**

| Mix No. | Cement (kg/m³) | IBA (kg/m³) | Sand (kg/m³) | Water (kg/m³) | Water-to-binder ratio | NaOH (kg/m³) | Molarity (mol/l) | Curing temp. |
|---|---|---|---|---|---|---|---|---|
| A1 | 460 | 115 | 575 | 201.3 | 0.35 | 7.80 | 1 | 80°C |
| A2 | 460 | 115 | 575 | 201.3 | 0.35 | 0.78 | 0.1 | 80°C |
| A3 | 460 | 115 | 575 | 201.3 | 0.35 | 0.08 | 0.01 | 80°C |
| B1 | 460 | 115 | 575 | 201.3 | 0.35 | 0.00 | - | 80°C |
| B2 | 460 | 115 | 575 | 201.3 | 0.35 | 0.00 | - | 20°C |
| C1 | 345 | 230 | 575 | 402.5 | 0.70 | 15.60 | 1 | 80°C |
| C2 | 230 | 345 | 575 | 402.5 | 0.70 | 15.60 | 1 | 80°C |

The mixture was prepared in a mortar mixer with a planetary rotating blade. The cement, IBA and sand were dry-mixed first for approximately 1 to 2 minutes, followed by the addition of water or alkaline solution and mixed for another 2 to 3 minutes. The fresh mixture was cast into 50 mm cubic molds and vibrated for 30 seconds. The molds were covered with plastics to prevent water evaporation and the specimens were cured in room temperature of 20 °C (mix B2) or elevated temperature of 80 °C right after casting for 3 days. After that, specimens were demolded and cured in water until testing at the age of 28 days.

### Example 4: Characterization (Embodiment 2)

Dry density was defined as a ratio of the dry weight to the volume of each specimen. The specimens were dried in oven at 105 °C for at least 24 hours. The weight and volume of the dry specimen were recorded to determine the dry density.

Compression tests were conducted using 50 mm cube specimen at the age of 28 days. The loading rate was 0.50 mm/min and only peak loads were recorded. Each data point was the average of three specimens.

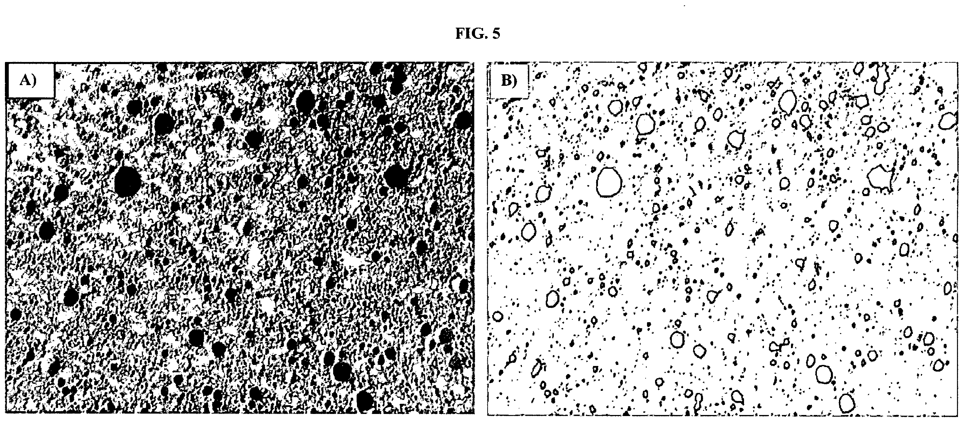

To evaluate the macro-porosity of lightweight concrete, image of the cross-section of the specimen (12 × 9 mm²) was captured by means of the Nikon SMZ745T optical microscope. The photo was post-proceeded into a binary image for quantitative measurement of the macro-porosity of the cross-section as shown in **FIG. 5A and 5B****.**

Scanning electron microscope (SEM) technique was conducted by using JEOL-7400F field-emission scanning electron microscope to examine the microstructure of lightweight concrete.

**TABLE 6: Density and compressive strength of examples**

| Mix No. | Dry density (kg/m³) | Compressive strength (MPa) |
|---|---|---|
| A1 | 1324.0 | 5.7 |
| A2 | 1443.7 | 12.5 |
| A3 | 1512.0 | 16.0 |
| B1 | 1553.6 | 19.5 |
| B2 | 1604.8 | 21.5 |
| C1 | 1056.4 | 2.7 |
| C2 | 931.6 | 1.5 |

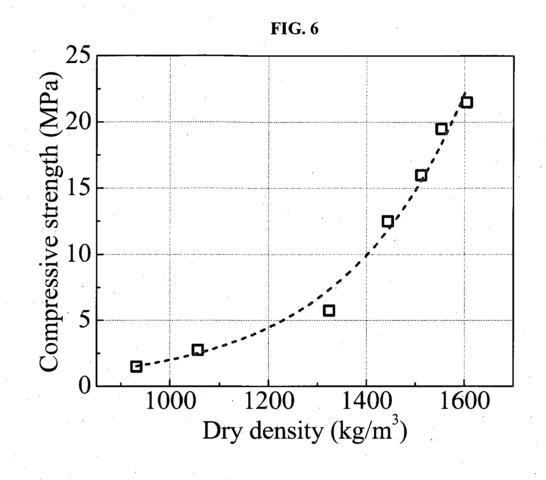

The compressive strength and dry density are summarized in **TABLE 6.** As can be seen, dry density of the resulting lightweight concrete ranges from 900 kg/m³ to 1,600 kg/m³ with compressive strength between 1.5 MPa and 21.5 MPa. The general trend shows a positive correlation between the compressive strength and the density of lightweight concretes. As shown in **FIG. 6****,** the compressive strength of lightweight concrete increased with the increase of dry density, which satisfied an exponential correlation in the whole range.

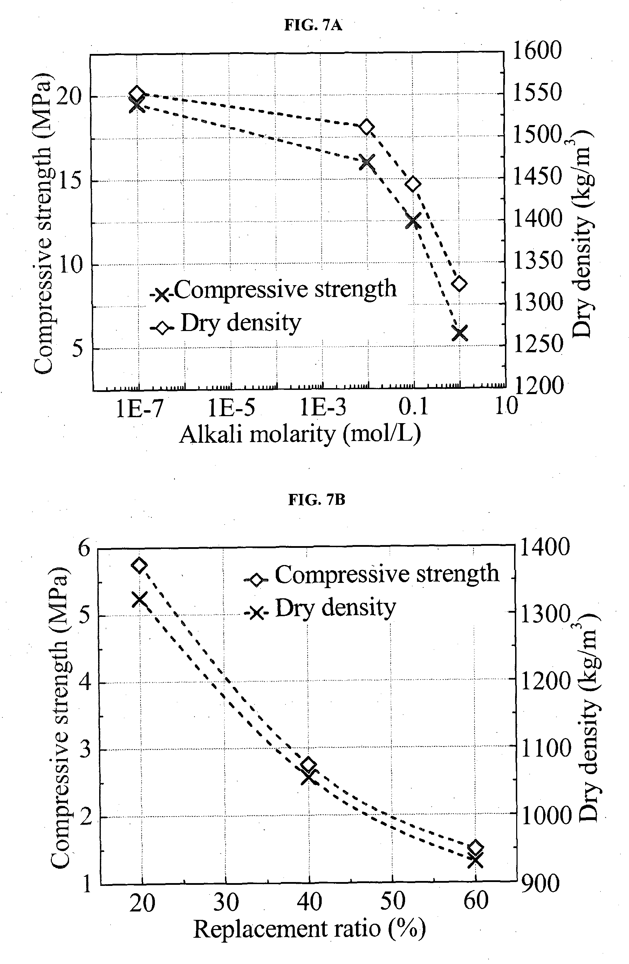

**FIG. 7** shows the effect of alkali molarity **(****FIG. 7A****)** and IBA content **(****FIG. 7B****)** on the properties of lightweight concrete. As can be seen, compressive strength as well as the dry density decreases with the increase of alkali molarity or IBA content. Higher alkali molarity greatly promotes hydrogen generation from IBA resulting in more aeration and lower density and compressive strength. Similarly, higher IBA content generates more hydrogen which reduces the density of samples C1 and C2. In addition, IBA itself has lower specific gravity than cement. The inclusion of higher dosage of IBA naturally reduces the dry density of the resulting material.

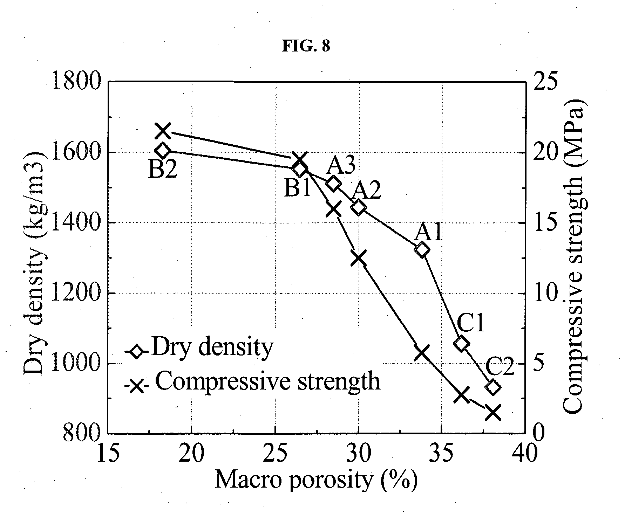

The macro-porosity of aerated lightweight concrete in this research ranges from 15 % to 40 %. **FIG. 8** shows the effect of macro-porosity on the dry density and compressive strength of each mix of lightweight concrete. As can be seen from the figure, both dry density and compressive strength decrease with the increase of macro-porosity. Decrease of dry density as well as compressive strength mainly results from the increase of macro-porosity. Both suitable alkali molarity and proper dosage of IBA are the critical factors for obtaining better pore structures and further for improving the mechanical and physical properties of lightweight concrete.

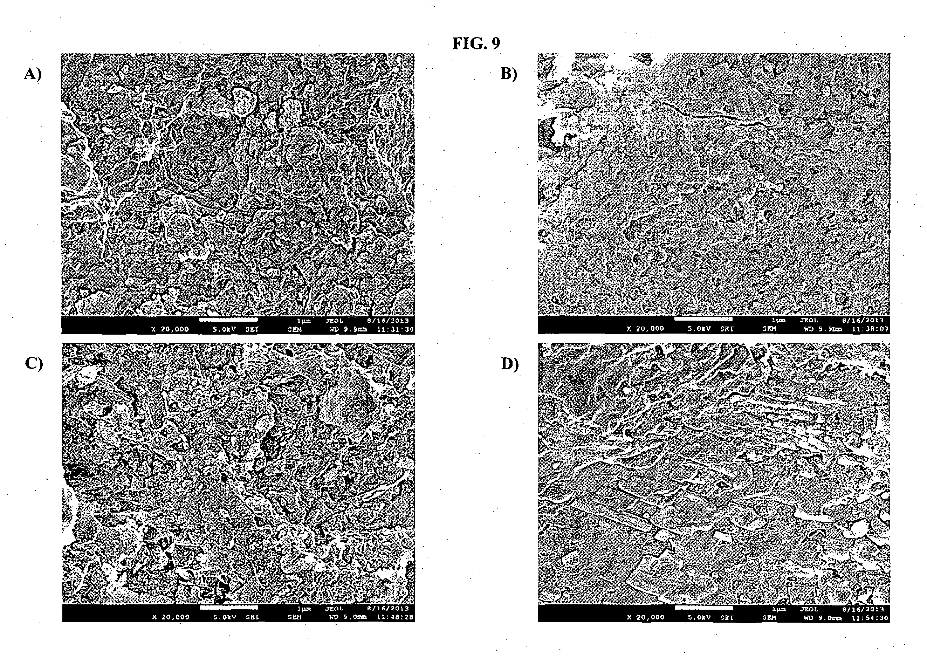

**FIG. 9** shows the microstructure of lightweight concrete prepared with tap water (denoted by TW) and sodium hydroxide solution (denoted by NH) curing in oven at 80 °C. As can be seen, matrix of the TW sample **(****FIG. 9A****)** has a denser microstructure as compared to that of the NH sample **(****FIG. 9C****).** This is mainly due to accelerated hydration when sodium hydroxide is used in cement. Coarse calcium silicate hydrates and large amount of ettringite are formed at early age resulting in a loose microstructure. In addition, crystal structure is found in the wall of macro-pores of the NH sample **(****FIG. 9D****).** Addition of sodium hydroxide increases the concentration of hydroxyl ions in the pore solution which depresses the solubility of Ca²⁺ ions. As a result, calcium carbonate and/or calcium hydroxide may precipitate on the wall of macro-pores as shown in **FIG. 9D****.**

### Example 5: Commercial applications

According to the use and physical properties, lightweight concretes may be classified into the following three categories as shown in **TABLE 7.**

**TABLE 7: Classification of lightweight concretes**

| Classification | Density (kg/m³) | Typical strength range (MPa) | Thermal conductivity (W/m-K) | Use |
|---|---|---|---|---|
| Structural lightweight concretes | 1,350-1,900 | 17-63 | 0.50-1.30 | Structural |
| Moderate-strength concretes | 800-1,350 | 7-14 | 0.15-0.50 | Structural /Insulating |
| Low-density concretes | 300-800 | 0.7-2 | 0.05-0.15 | Insulating |

Lightweight concrete may be formed of the constituents as shown in **TABLE 8.**

**TABLE 8: Typical mix proportion and cost structure of lightweight concrete**

| Material | Mix proportion (kg/m³) | Unit price (S$/ton) | Cost (S$/m³) | Cost ratio |
|---|---|---|---|---|
| Cement | 49 | 152 | 7.4 | 26% |
| Sand | 490 | 14 | 6.9 | 25% |
| Lime | 133 | 80 | 10.6 | 38% |
| Gypsum | 28 | 20 | 0.6 | 2% |
| Aluminum powder | 0.46 | 5,200 | 2.4 | 9% |
| | | Total | 27.9 | 100% |

As can be seen from **TABLE 8,** aluminum powder may make up 10 % of total material cost of lightweight concrete. Advantageously, IBA contains a significant amount of metallic aluminum due to increasing amounts of household waste, and which are being incinerated. The metallic aluminum in IBA allows its reutilization as an aerating agent in production of lightweight concrete.

Furthermore, IBA may possess high levels of calcium oxide, silicon oxide, and aluminum oxide content to allow its use as a supplementary cementitious material to partially replace cement and other binders used in lightweight concrete. The calcium oxide, silicon oxide, and aluminum oxide may possess pozzolanic properties that may lead to remarkable improvement of concrete strength.

By using municipal solid waste incineration bottom ash (IBA) as aerating agent to replace costly aluminum powder, as well as supplementary cementitious material to replace cement and other binders for the production of lightweight concrete, the proposed method provides a practical and cost effective solution to recycle and to reutilize incineration bottom ash (IBA) for civil engineering applications. The proposed method contributes not only to prolong the lifespan of landfills but also to create alternative resources from wastes. Other tangible and intangible benefits of the proposed method include alleviating the disposal costs of the ash, preserving land capacity, conserving dwindling supplies of natural raw materials, and mitigating potential environmental impacts. With lower density (200 kg/m³ to 1,900 kg/m³) and thermal conductivity (0.05 W/m-K to 1.30 W/m-K), IBA lightweight concrete is an idea construction material to reduce self-weight of structure and to provide thermal insulation and sound-proofing.

Potential applications include structural concretes, floors, trench fills, roof insulation and other insulating purposes, as well as to make masonry units. Preliminary market analysis shows that global market demand for aerated lightweight concrete is around 110 million cubic meter per year, which represents an annual market size of S$18 billion.

While the present invention has been particularly shown and described with reference to exemplary embodiments thereof, it will be understood by those of ordinary skill in the art that various changes in form and details may be made therein within the scope of the present invention as defined by the following claims.

## Claims

1. Method of manufacturing a lightweight concrete, the method comprising:
a) providing ash obtained from incineration of waste, the ash comprising at least about 0.1 wt% metallic aluminum;
b) mixing the ash with a binder to form a mixture; and
c) curing the mixture to obtain the lightweight concrete,
wherein the ash is derived from bottom ash of a solid waste incinerator facility; providing ash obtained from incineration of waste comprises reducing particle size of the ash to an average particle size of 500 µm or less

2. Method according to claim 1, wherein
(a) the average particle size is about 20 µm to about 40 µm, or the average particle size is about 20 µm to about 40 µm, wherein reducing particle size of the ash is carried out by ball milling; and/or
(b) providing ash obtained from incineration of waste comprises drying the ash.

3. Method according to claim 1 or 2, wherein the binder is selected from the group consisting of a hydraulic cement binder and an inorganic polymer binder.

4. Method according to any one of claims 1 to 3, wherein the binder comprises or consists of a hydraulic cement binder, wherein preferably
(a) the hydraulic cement binder is selected from the group consisting of Portland cement, blended Portland cement, expansive cement, rapid setting and hardening cement, calcium aluminate cement, magnesium phosphate, and mixtures thereof; and/or
(b) the hydraulic cement binder comprises or consists of Type I Portland cement.

5. Method according to claim 4, wherein mixing the ash with a binder comprises adding at least one of a pozzolanic admixture, water, lime, alkali, and a set-control admixture to the mixture, wherein preferably,
(a) the pozzolanic admixture is selected from the group consisting of fly ash, silica fume, ground granulated blast-furnace slag, and combinations thereof; and/or
(b) ratio of water to the binder is in the range of about 0.2 to about 1 by weight, preferably about 0.35 to about 0.7 by weight; and/or
(c) the lime comprises or consists of an alkaline earth metal carbonate, preferably at least one of magnesium carbonate and calcium carbonate; and/or
(d) the alkali is selected from the group consisting of an alkali metal hydroxide, an alkaline earth metal hydroxide, ammonium hydroxide, and combinations thereof, preferably selected from the group consisting of sodium hydroxide, potassium hydroxide, calcium hydroxide, magnesium hydroxide, sodium carbonate, and combinations thereof, more preferably comprises or consists of sodium hydroxide, wherein preferably, concentration of hydroxide in the mixture is 100 mol/L or less; and/or
(e) the set-control admixture is selected from the group consisting of gypsum, anhydrite, and combinations thereof.

6. Method according to any one of claims 1 to 5, wherein the binder comprises or consists of an inorganic polymer binder, wherein preferably, the inorganic polymer binder is selected from the group consisting of alkali activated aluminosilicates, geopolymer, alkali activated cement, and mixtures thereof.

7. Method according to claim 6, wherein the inorganic polymer binder is obtained by reacting an inorganic polymer precursor with an alkaline activator liquid, wherein preferably,
(a) the inorganic polymer precursor is selected from the group consisting of coal fly ash, metakaoline, waste incinerator ash, ground granulated blast-furnace slag, and combinations thereof; and/or
(b) the alkaline activator liquid comprises a silicate and/or a hydroxide selected from the group consisting of an alkali metal hydroxide, an alkaline earth metal hydroxide, ammonium hydroxide, and combinations thereof, wherein preferably
(i) the silicate comprises or consists of an alkali metal silicate, and/or
(ii) the silicate comprises or consists of sodium silicate, and/or
(iii) the hydroxide comprises or consists of an alkali metal hydroxide, and/or
(iv) the hydroxide comprises or consists of sodium hydroxide, and/or
(v) concentration of hydroxide in the alkaline activator liquid is at least 1 mol/L, and/or
(vi) ratio of hydroxide to silicate is in the range of about 0.2 to about 3 by weight, and/or
(vii) the alkaline activator liquid is an aqueous solution of the silicate and/or the hydroxide.

8. Method according to claim 7, wherein ratio of alkaline activator liquid to the inorganic polymer binder is in the range of about 0.3 to about 2 by weight.

9. Method according to any one of claims 1 to 8, wherein
(a) ratio of ash to binder in the mixture is in the range of about 0.01 to about 100 by weight; and/or
(b) mixing the ash with a binder comprises adding at least one of a viscosity control agent, a water reducing agent, and aggregates to the mixture, wherein preferably,
(i) the viscosity control agent is selected from the group consisting of methylcellulose, polyvinyl alcohol, starch, and combinations thereof, and/or
(ii) ratio of the viscosity control agent to the binder is not more than 0.05 by weight, and/or
(iii) the water reducing agent is selected from the group consisting of carboxylated polymer, gypsum, anhydrite, and mixtures thereof, and/or
(iv) ratio of the water reducing agent to the binder is in the range of about 0.001 to about 0.002 by weight, and/or
(v) the aggregates comprise coarse aggregates selected from the group consisting of gravel, crushed rock, slag aggregate, recycled aggregate, crushed quartz, granite, gneiss, basalt, limestone, and combinations thereof, and/or
(vi) the aggregates comprise fine aggregates selected from the group consisting of sand, fly ash, silica fume, artificial light weight fine aggregate, and combinations thereof.

10. Method according to any one of claims 1 to 9, wherein curing the mixture to obtain the lightweight concrete is carried out at a temperature in the range of about 20 °C to about 80 °C, preferably about 75 °C to about 80 °C.

## Patentansprüche

1. Herstellungsverfahren eines Leichtgewicht-Betons, das Verfahren aufweisend:
a) Bereitstellen von Asche, welche aus Abfallverbrennung erhalten wird, wobei die Asche zumindest in etwa 0,1 Gew.-% von metallischem Aluminium enthält,
b) Mischen der Asche mit einem Bindemittel, um eine Mischung zu bilden, und
c) Aushärten der Mischung, um den Leichtgewicht-Beton zu erhalten,
wobei die Asche aus Bodenasche einer Feststoffabfall-Verbrennungsanlage erlangt wird, wobei das Bereitstellen der Asche, die aus Abfallverbrennung erhalten wird, ein Reduzieren der Partikelgröße der Asche auf eine durchschnittliche Partikelgröße von 500 µm oder weniger aufweist.

2. Verfahren gemäß Anspruch 1, wobei
a) der durchschnittliche Partikeldurchmesser in etwa 20 µm bis in etwa 40 µm ist oder der durchschnittliche Partikeldurchmesser in etwa 20 µm bis in etwa 40 µm ist, wobei das Reduzieren der Partikelgröße der Asche durch Kugelmahlen ausgeführt wird und/oder
b) das Bereitstellen der Asche, die aus Abfallverbrennung erhalten wird, ein Trocknen der Asche aufweist.

3. Verfahren gemäß Anspruch 1 oder 2, wobei das Bindemittel aus der Gruppe ausgewählt ist, welche aus einem hydraulischen Zementbindemittel und einem anorganischen Polymerbindemittel besteht.

4. Verfahren gemäß irgendeinem der Ansprüche 1 bis 3, wobei das Bindemittel ein hydraulisches Zementbindemittel aufweist oder daraus besteht, wobei bevorzugt
a) das hydraulische Zementbindemittel aus der Gruppe ausgewählt ist, die aus Portlandzement, Portlandzementmischung, Quellzement, schnellbindendem und -härtendem Zement, Tonerdezement, Magnesiumphosphat und Mischungen daraus besteht, und/oder
b) das hydraulische Zementbindemittel Typ-I Portlandzement aufweist oder daraus besteht.

5. Verfahren gemäß Anspruch 4, wobei das Mischen der Asche mit dem Bindemittel ein Hinzugeben von zumindest einem von einem puzzolanischen Zuschlagstoff, Wasser, Kalk, Alkali und einem Abbindungssteuerungszuschlagstoff zur Mischung aufweist, wobei bevorzugt
a) der puzzolanische Zuschlagstoff aus der Gruppe ausgewählt ist, die aus Flugasche, Silicastaub, gemahlen-granulierte Hochofenschlacke und Kombinationen daraus besteht, und oder
b) ein Gewichtsverhältnis von Wasser zu Bindemittel in dem Bereich von in etwa 0,2 bis in etwa 1 liegt, bevorzugt in etwa 0,35 bis in etwa 0,7, und/oder
c) der Kalk ein Erdalkalimetallcarbonat aufweist oder daraus besteht, bevorzugt zumindest eines von Magnesiumcarbonat und Calciumcarbonat, und/oder
d) das Alkali aus der Gruppe ausgewählt ist, die aus einem Alkalimetallhydroxid, einem Erdalkalimetallhydroxid, Ammoniumhydroxid und Kombinationen daraus besteht, bevorzugt aus der Gruppe ausgewählt ist, die aus Natriumhydroxid, Kaliumhydroxid, Calciumhydroxid, Magnesiumhydroxid, Natriumcarbonat und Kombinationen daraus besteht, weiter bevorzugt Natriumhydroxid aufweist oder daraus besteht, wobei eine Konzentration des Hydroxids in der Mischung bevorzugt 100 Mol/L oder weniger ist, und/oder
e) der Abbindungssteuerungszuschlagstoff aus der Gruppe ausgewählt ist, die aus Gips, Anhydrit und Kombinationen daraus besteht.

6. Verfahren gemäß irgendeinem der Ansprüche 1 bis 5, wobei das Bindemittel ein anorganisches Polymerbindemittel aufweist oder daraus besteht, wobei das anorganische Polymerbindemittel bevorzugt aus der Gruppe ausgewählt ist, die aus alkalischaktivierten Aluminosilikaten, Geopolymer, alkalisch-aktiviertem Zement und Mischungen daraus besteht.

7. Verfahren gemäß Anspruch 6, wobei das anorganische Polymerbindemittel erhalten wird durch Reagieren eines anorganischen Prepolymers mit einer alkalischen Aktivatorflüssigkeit, wobei bevorzugt
a) das anorganische Prepolymer aus der Gruppe ausgewählt ist, die aus Kohleflugasche, Metakaolin, Abfallverbrennungsasche, gemahlen-granulierte Hochofenschlacke und Kombinationen daraus besteht, und/oder
b) die alkalische Aktivatorflüssigkeit ein Silicat und/oder ein Hydroxid aufweist, welches aus der Gruppe ausgewählt ist, die aus einem Alkalimetallhydroxid, einem Erdalkalimetallhydroxid, Ammoniumhydroxid und Kombinationen daraus besteht, wobei bevorzugt
i) das Silicat ein Alkalimetallsilicat aufweist oder daraus besteht und/oder
ii) das Silicat Natriumsilikat aufweist oder daraus besteht und/oder
iii) das Hydroxid ein Alkalimetallhydroxid aufweist oder daraus besteht und/oder
iv) das Hydroxid Natriumhydroxid aufweist oder daraus besteht und/oder
v) eine Konzentration des Hydroxids in der alkalischen Aktivatorflüssigkeit zumindest 1 Mol/L ist und/oder
vi) ein Verhältnis des Hydroxids zum Silicat in dem Gewichtsbereich von in etwa 0,2 bis in etwa 3 liegt und/oder
vii) die alkalische Aktivatorflüssigkeit eine wässrige Lösung des Silicats und/oder des Hydroxids ist.

8. Verfahren gemäß Anspruch 7, wobei ein Gewichtsverhältnis der alkalischen Aktivatorflüssigkeit zum anorganischem Polymerbindemittel in dem Bereich von in etwa 0,3 bis 2 liegt.

9. Verfahren gemäß irgendeinem der Ansprüche 1 bis 8, wobei
a) ein Gewichtsverhältnis der Asche zum Bindemittel in der Mischung in dem Bereich von in etwa 0,01 bis in etwa 100 liegt und/oder
b) das Mischen der Asche mit dem Bindemittel ein Hinzugeben von zumindest einem von einem Viskositätssteuermittel, einem Wasserreduktionsmittel und Zuschlägen zur Mischung aufweist, wobei bevorzugt
i) das Viskositätssteuermittel aus der Gruppe ausgewählt ist, die aus Methylcellulose, Polyvinylalkohol, Stärke und Kombinationen daraus besteht, und/oder
ii) ein Gewichtsverhältnis von Viskositätssteuermittel zu Bindemittel nicht mehr als 0,05 ist und/oder
iii) das Wasserreduktionsmittel aus der Gruppe ausgewählt ist, die aus carboxyliertem Polymer, Gips, Anhydrid und Mischungen daraus besteht, und/oder
iv) ein Gewichtsverhältnis von Wasserreduktionsmittel zu Bindemittel in dem Bereich von in etwa 0,001 bis in etwa 0,002 liegt und/oder
v) die Zuschläge grobe Zuschläge aufweisen, welche aus der Gruppe ausgewählt sind, die aus Kies, Schotter, Schlackenzuschläge, recycelten Zuschlägen, gebrochenem Quarz, Granit, Gneis, Basalt, Kalkstein und Kombinationen daraus besteht und/oder
vi) die Zuschläge feine Zuschläge aufweisen, welche aus der Gruppe ausgewählt sind, die aus Sand, Flugasche, Silicastaub, künstliche, leichte, feine Zuschläge und Kombinationen daraus besteht.

10. Verfahren gemäß irgendeinem der Ansprüche 1 bis 9, wobei das Härten der Mischung, um einen Leichtgewicht-Beton zu erhalten, bei einer Temperatur in dem Bereich von in etwa 20°C bis in etwa 80°C ausgeführt wird, bevorzugt in etwa 75°C bis in etwa 80°C.

## Revendications

1. Procédé de fabrication d'un béton léger, le procédé comprenant :
a) la fourniture de cendres obtenues à partir de l'incinération de déchets, les cendres comprenant au moins environ 0,1 % en poids d'aluminium métallique ;
b) le mélange des cendres avec un liant pour former un mélange ; et
c) le durcissement du mélange pour obtenir le béton léger,
les cendres étant dérivées de cendres résiduelles d'une installation d'incinérateur de déchets solides ; la fourniture de cendres obtenues à partir de l'incinération de déchets comprenant la réduction de la taille de particule des cendres à une taille de particule moyenne de 500 µm ou moins.

2. Procédé selon la revendication 1, dans lequel
(a) la taille de particule moyenne est d'environ 20 µm à environ 40 µm, ou
la taille de particule moyenne est d'environ 20 µm à environ 40 µm, la réduction de la taille de particule des cendres étant réalisée par broyage à billes ; et/ou
(b) la fourniture de cendres obtenues à partir de l'incinération de déchets comprend le séchage des cendres.

3. Procédé selon la revendication 1 ou 2, dans lequel le liant est choisi dans le groupe constitué d'un liant de ciment hydraulique et d'un liant de polymère inorganique.

4. Procédé selon l'une quelconque des revendications 1 to 3, dans lequel le liant comprend ou est constitué d'un liant de ciment hydraulique, où, de préférence
(a) le liant de ciment hydraulique est choisi dans le groupe constitué de ciment Portland, ciment Portland mixte, ciment expansif, ciment à prise et durcissement rapides, ciment d'aluminate de calcium, phosphate de magnésium, et des mélanges de ceux-ci ; et/ou
(b) le liant de ciment hydraulique comprend ou est constitué de ciment Portland de type I.

5. Procédé selon la revendication 4, dans lequel le mélange des cendres avec un liant comprend l'ajout d'au moins l'un parmi un mélange pouzzolanique, l'eau, la chaux, un alcali et un mélange de contrôle de prise au mélange, où, de préférence,
(a) le mélange pouzzolanique est choisi dans le groupe constitué de cendres volantes, silice pyrogénée, scories de haut fourneau granulées broyées, et des combinaisons de ceux-ci ; et/ou
(b) le rapport de l'eau au liant est compris dans la plage d'environ 0,2 à environ 1 en poids, de préférence d'environ 0,35 à environ 0,7 en poids ; et/ou
(c) la chaux comprend ou est constituée d'un carbonate de métal alcalino-terreux, de préférence au moins l'un parmi le carbonate de magnésium et le carbonate de calcium ; et/ou
(d) l'alcali est choisi dans le groupe constitué d'un hydroxyde de métal alcalin, un hydroxyde de métal alcalino-terreux, l'hydroxyde d'ammonium, et des combinaisons de ceux-ci, de préférence choisi dans le groupe constitué de l'hydroxyde de sodium, l'hydroxyde de potassium, l'hydroxyde de calcium, l'hydroxyde de magnésium, le carbonate de sodium, et des combinaisons de ceux-ci, plus préférablement comprend ou est constitué d'hydroxyde de sodium, où, de préférence, la concentration d'hydroxyde dans le mélange est de 100 mol/l ou moins ; et/ou
(e) le mélange de contrôle de prise est choisi dans le groupe constitué d'un gypse, d'une anhydrite, et des combinaisons de ceux-ci.

6. Procédé selon l'une quelconque des revendications 1 à 5, dans lequel le liant comprend ou est constitué d'un liant de polymère inorganique, où, de préférence, le liant de polymère inorganique est choisi dans le groupe constitué d'aluminosilicates activés par alcali, d'un géopolymère, de ciment activé par alcali, et des mélanges de ceux-ci.

7. Procédé selon la revendication 6, dans lequel le liant de polymère inorganique est obtenu par réaction d'un précurseur de polymère inorganique avec un activateur alcalin liquide, où, de préférence,
(a) le précurseur de polymère inorganique est choisi dans le groupe constitué de cendres volantes de houille, métakaolin, cendres d'incinérateur de déchets, scories de haut fourneau granulées broyées, et des combinaisons de ceux-ci ; et/ou
(b) le liquide activateur alcalin comprend un silicate et/ou un hydroxyde choisi dans le groupe constitué d'un hydroxyde de métal alcalin, un hydroxyde de métal alcalino-terreux, l'hydroxyde d'ammonium, et des combinaisons de ceux-ci, où, de préférence
(i) le silicate comprend ou est constitué d'un silicate de métal alcalin, et/ou
(ii) le silicate comprend ou est constitué de silicate de sodium, et/ou
(iii) l'hydroxyde comprend ou est constitué d'un hydroxyde de métal alcalin, et/ou
(iv) l'hydroxyde comprend ou est constitué de l'hydroxyde de sodium, et/ou
(v) la concentration d'hydroxyde dans le liquide activateur alcalin est d'au moins 1 mol/l, et/ou
(vi) le rapport de l'hydroxyde au silicate est compris dans la plage d'environ 0,2 à environ 3 en poids, et/ou
(vii) le liquide activateur alcalin est une solution aqueuse du silicate et/ou de l'hydroxyde.

8. Procédé selon la revendication 7, dans lequel le rapport du liquide activateur alcalin au polymère inorganique liant est compris dans la plage d'environ 0,3 à environ 2 en poids.

9. Procédé selon l'une quelconque des revendications 1 à 8, dans lequel
(a) le rapport des cendres au liant dans le mélange est compris dans la plage d'environ 0,01 à environ 100 en poids ; et/ou
(b) le mélange des cendres avec un liant comprend l'ajout d'au moins l'un parmi un agent de régulation de viscosité, un agent de réduction d'eau, et des agrégats au mélange, où, de préférence,
(i) l'agent de régulation de viscosité est choisi dans le groupe constitué de la méthylcellulose, l'alcool polyvinylique, l'amidon, et des combinaisons de ceux-ci, et/ou
(ii) le rapport de l'agent de régulation de viscosité au liant est de pas plus de 0,05 en poids, et/ou
(iii) l'agent de réduction d'eau est choisi dans le groupe constitué d'un polymère carboxylé, un gypse, une anhydrite, et des mélanges de ceux-ci, et/ou
(iv) le rapport de l'agent de réduction d'eau au liant est compris dans la plage d'environ 0,001 à environ 0,002 en poids, et/ou
(v) les agrégats comprennent des agrégats grossiers choisis dans le groupe constitué de gravier, roche broyée, agrégat de scories, agrégat recyclé, quartz broyé, granit, gneiss, basalte, calcaire, et des combinaisons de ceux-ci, et/ou
(vi) les agrégats comprennent des agrégats fins choisis dans le groupe constitué de sable, cendres volantes, silice pyrogénée, agrégat fin léger artificiel, et des combinaisons de ceux-ci.

10. Procédé selon l'une quelconque des revendications 1 à 9, dans lequel le durcissement du mélange pour obtenir le béton léger est conduit à une température comprise dans la plage d'environ 20 °C à environ 80 °C, de préférence d'environ 75 °C à environ 80 °C.
